# EUROPEAN PATENT APPLICATION

(11) **EP 4 723 150 A1**
(43) Date of publication of application: **08.04.2026**
(21) Application number: 23940563.2
(22) Date of filing: 05.06.2023
(51) Int. Cl.: H01F 38/18, H01F 38/14

(54) **POWER TRANSMISSION DEVICE AND MOTOR APPARATUS**

(71) Applicant: TDK Corporation, Tokyo 103-6128 (JP)
(72) Inventor: CHAI, Yuki, Tokyo 103-6128 (JP)
(74) Representative: Epping - Hermann - Fischer
(86) International application number: PCT/JP2023/020786
(87) International publication number: WO 2024/252455

(57) **Abstract**

An electric power transmission device according to one embodiment of the invention includes a magnetic core, a first winding, a first rotary member, a second winding, and one or more rectifiers. The magnetic core has a ring shape including a through hole through which a shaft extends. The magnetic core includes therein a cavity along a circumferential direction about an axis of rotation of the shaft, and has an opening provided along the circumferential direction in a surface in contact with the through hole. The opening couples the through hole and the cavity to each other. The first winding is provided in the cavity and wound along the circumferential direction. The first rotary member is provided at a location corresponding to the opening in an axial direction of the axis of rotation, and is rotationally movable in the circumferential direction, inside the cavity, with a rotation of the shaft. The second winding is provided on the first rotary member and wound along the circumferential direction. The one or more rectifiers are provided in contact with the shaft and are coupled to the second winding.

## Description

### Technical Field

The invention relates to an electric power transmission device that contactlessly transmits electric power, and to a motor apparatus including such an electric power transmission device.

### Background Art

Examples of a motor include an electrically excited synchronous motor (EESM). Such a motor includes a stator on which a winding is wound and a rotor on which a winding is wound. In the motor, a current to be fed through the winding wound on the rotor may be varied in accordance with a rotation speed of the motor. This makes it possible to achieve improved efficiency of the motor.

Some devices allow for transmission of electric power between a stator and a rotor. For example, Patent Literature 1 discloses a rotary transformer that includes a stator on which a winding is wound and a rotor on which a winding is wound, and that allows for transmission of electric power between the stator and the rotor.

### Citation List

### Patent Literature

Patent Literature 1: Japanese Unexamined Patent Application Publication No. 2002-75760

### Summary of the Invention

Typically, what is desired of an electronic device is to be high in reliability. High reliability is also expected from an electric power transmission device that allows for transmission of electric power from a stator to a rotor.

It is desirable to provide an electric power transmission device and a motor apparatus that each make it possible to increase reliability.

An electric power transmission device according to one embodiment of the invention includes a magnetic core, a first winding, a first rotary member, a second winding, and one or more rectifiers. The magnetic core has a ring shape including a through hole through which a shaft extends. The magnetic core includes therein a cavity along a circumferential direction about an axis of rotation of the shaft, and has an opening provided along the circumferential direction in a surface, of the magnetic core, that is in contact with the through hole. The opening couples the through hole and the cavity to each other. The first winding is provided in the cavity and wound along the circumferential direction. The first rotary member is provided at a location corresponding to the opening in an axial direction of the axis of rotation, and is rotationally movable in the circumferential direction, inside the cavity, with a rotation of the shaft. The second winding is provided on the first rotary member and wound along the circumferential direction. The one or more rectifiers are provided in contact with the shaft and are coupled to the second winding.

A motor apparatus according to one embodiment of the invention includes a motor, a shaft, an inverter, a magnetic core, a first winding, a rotary member, a second winding, and one or more rectifiers. The motor includes a motor stator and a motor rotor. The motor stator includes a first motor magnetic core and a first motor winding. The motor rotor includes a second motor magnetic core and a second motor winding. The shaft is coupled to the motor rotor. The magnetic core has a ring shape including a through hole through which the shaft extends. The magnetic core includes therein a cavity along a circumferential direction of the shaft, and has an opening provided along the circumferential direction in a surface, of the magnetic core, that is in contact with the through hole. The opening couples the through hole and the cavity to each other. The first winding is coupled to the inverter, provided in the cavity, and wound along the circumferential direction. The first rotary member is provided at a location corresponding to the opening in an axial direction of the shaft, and is rotationally movable in the circumferential direction, inside the cavity, with a rotation of the shaft. The second winding is provided on the first rotary member and wound along the circumferential direction. The one or more rectifiers are provided in contact with the shaft, coupled to the second winding, and provided in a path coupling the second winding and the second motor winding to each other.

The electric power transmission device and the motor apparatus according to the respective embodiments of the invention each make it possible to increase reliability.

### Brief Description of Drawings

[FIG. 1] FIG. 1 is a block diagram illustrating a configuration example of a motor apparatus according to a first embodiment of the invention.
[FIG. 2] FIG. 2 is a circuit diagram illustrating a configuration example of an inverter and an electric power transmission device according to one embodiment.
[FIG. 3] FIG. 3 is a perspective diagram illustrating a configuration example of the electric power transmission device illustrated in FIG. 1.
[FIG. 4] FIG. 4 is an explanatory diagram illustrating a configuration example of the electric power transmission device illustrated in FIG. 3.
[FIG. 5] FIG. 5 is a cross-sectional diagram illustrating a configuration example of the electric power transmission device illustrated in FIG. 3.
[FIG. 6] FIG. 6 is an explanatory diagram illustrating a configuration example of a stator illustrated in FIG. 5.
[FIG. 7] FIG. 7 is an explanatory diagram illustrating a configuration example of a rotor and a rectifying member illustrated in FIG. 5.
[FIG. 8] FIG. 8 is an explanatory diagram illustrating an operation example of the electric power transmission device illustrated in FIG. 5.
[FIG. 9] FIG. 9 is a cross-sectional diagram illustrating a configuration example of an electric power transmission device according to a modification example of the first embodiment.
[FIG. 10] FIG. 10 is a cross-sectional diagram illustrating a configuration example of an electric power transmission device according to another modification example of the first embodiment.
[FIG. 11] FIG. 11 is a cross-sectional diagram illustrating a configuration example of a rotor and a rectifying member illustrated in FIG. 10.
[FIG. 12] FIG. 12 is a cross-sectional diagram illustrating a configuration example of a rotor and a rectifying member according to another modification example of the first embodiment.
[FIG. 13] FIG. 13 is an explanatory diagram illustrating a configuration example of an electric power transmission device according to another modification example of the first embodiment.
[FIG. 14] FIG. 14 is a cross-sectional diagram illustrating a configuration example of an electric power transmission device according to another modification example of the first embodiment.
[FIG. 15] FIG. 15 is a block diagram illustrating a configuration example of a motor apparatus according to a second embodiment.
[FIG. 16] FIG. 16 is a perspective diagram illustrating a configuration example of an electric power transmission device illustrated in FIG. 15.
[FIG. 17] FIG. 17 is an explanatory diagram illustrating a configuration example of the electric power transmission device illustrated in FIG. 16.
[FIG. 18] FIG. 18 is a cross-sectional diagram illustrating a configuration example of the electric power transmission device illustrated in FIG. 16.
[FIG. 19] FIG. 19 is an explanatory diagram illustrating a configuration example of a rotor illustrated in FIG. 18.
[FIG. 20] FIG. 20 is a cross-sectional diagram illustrating a configuration example of an electric power transmission device according to a modification example of the second embodiment.
[FIG. 21] FIG. 21 is a cross-sectional diagram illustrating a configuration example of an electric power transmission device according to another modification example of the second embodiment.
[FIG. 22] FIG. 22 is a cross-sectional diagram illustrating a configuration example of a rotor and a rectifying member illustrated in FIG. 21.

### Modes for Carrying Out the Invention

In the following, a description will be given in detail of embodiments of the invention with reference to the drawings. The description is given in the following order.
1. First Embodiment
2. Second Embodiment.

### <First Embodiment>

### [Configuration Example]

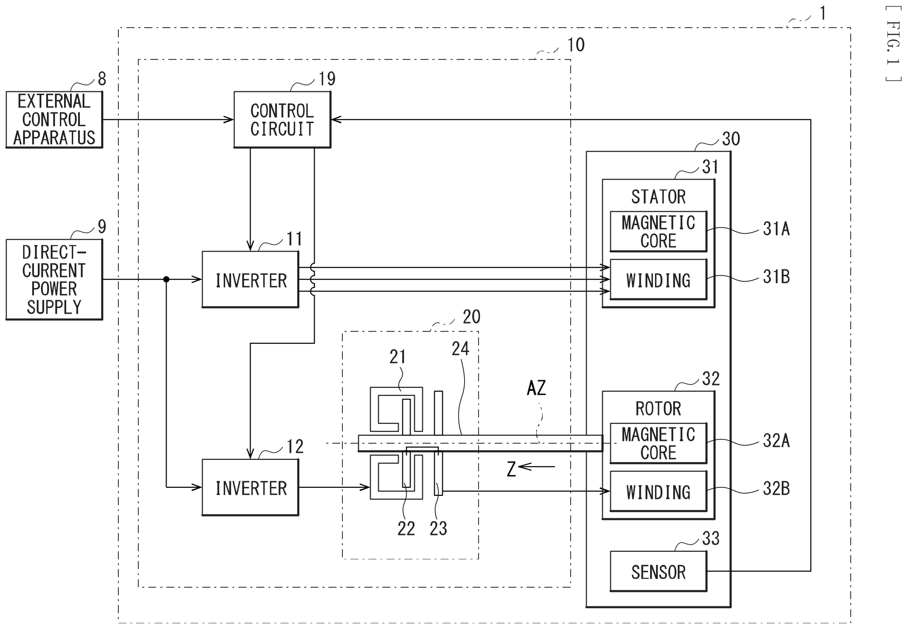

FIG. 1 illustrates a configuration example of a motor apparatus 1 including an electric power transmission device according to a first embodiment of the invention. The motor apparatus 1 is coupled to an external control apparatus 8 and a direct-current power supply 9. The external control apparatus 8 is configured to provide an instruction on a rotation speed to the motor apparatus 1. The direct-current power supply 9 is configured to supply direct-current electric power to the motor apparatus 1. The motor apparatus 1 is configured to generate a driving force, which is mechanical energy, based on the instruction from the external control apparatus 8 and through the use of the direct-current electric power supplied from the direct-current power supply 9. The motor apparatus 1 includes a driver 10 and a motor 30.

The driver 10 is configured to drive the motor 30. The driver 10 includes inverters 11 and 12, an electric power transmission device 20, and a control circuit 19.

The inverter 11 is configured to convert the direct-current electric power supplied from the direct-current power supply 9 into three-phase (U-phase, V-phase, and W-phase) alternating-current electric power, based on an instruction from the control circuit 19. In addition, the inverter 11 supplies the three-phase alternating-current electric power to a winding 31B of a stator 31 of the motor 30. The winding 31B will be described later.

The inverter 12 is configured to convert the direct-current electric power supplied from the direct-current power supply 9 into single-phase alternating-current electric power, based on an instruction from the control circuit 19. In addition, the inverter 12 supplies the alternating-current electric power to a winding 21B of a stator 21 of the electric power transmission device 20. The winding 21B will be described later.

The electric power transmission device 20 includes the stator 21, a rotor 22, a rectifying member 23, and a shaft 24. The electric power transmission device 20 is configured to transmit the alternating-current electric power supplied from the inverter 12, from the stator 21 to the rotor 22 by contactless transmission.

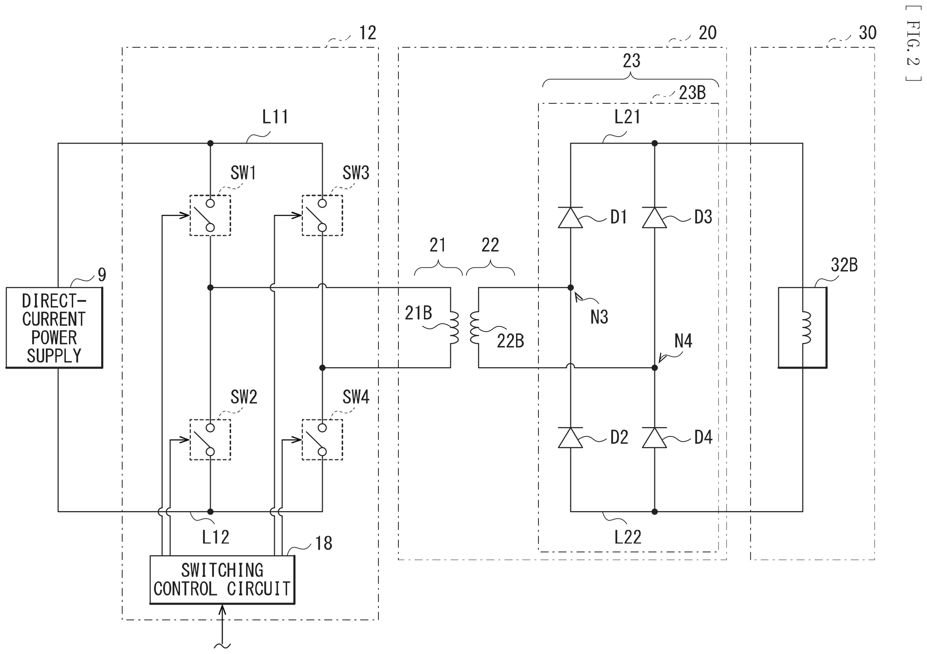

FIG. 2 illustrates a configuration example of the inverter 12 and the electric power transmission device 20. Note that FIG. 2 also illustrates the direct-current power supply 9 and a winding 32B of a rotor 32 of the motor 30. The inverter 12 is coupled to the direct-current power supply 9 via a voltage line L11 and a reference voltage line L12.

In this example, the inverter 12 is a full-bridge circuit. The inverter 12 includes switching elements SW1 to SW4 and a switching control circuit 18. The switching elements SW1 to SW4 each include, for example, a field-effect transistor, an insulated-gate bipolar transistor, or the like. The switching element SW1 is provided in a path coupling the voltage line L11 and a node N1 to each other, and is configured to perform a switching operation, based on a control signal supplied from the switching control circuit 18. The switching element SW2 is provided in a path coupling the node N1 and the reference voltage line L12 to each other, and is configured to perform a switching operation, based on a control signal supplied from the switching control circuit 18. The switching element SW3 is provided in a path coupling the voltage line L11 and a node N2 to each other, and is configured to perform a switching operation, based on a control signal supplied from the switching control circuit 18. The switching element SW4 is provided in a path coupling the node N2 and the reference voltage line L12 to each other, and is configured to perform a switching operation, based on a control signal supplied from the switching control circuit 18. The switching control circuit 18 is configured to control the switching operations of the switching elements SW1 to SW4 by supplying the respective control signals to the switching elements SW1 to SW4, based on instructions from the control circuit 19.

The electric power transmission device 20 includes the winding 21B, a winding 22B, and a rectifying circuit 23B. The winding 21B is provided in the stator 21. One end of the winding 21B is coupled to the node N1 of the inverter 12, and another end of the winding 21B is coupled to the node N2 of the inverter 12. The winding 22B is provided in the rotor 22. One end of the winding 22B is coupled to a node N3 of the rectifying circuit 23B, and another end of the winding 22B is coupled to a node N4 of the rectifying circuit 23B. The windings 21B and 22B configure what is called a rotary transformer. The winding 22B receives alternating-current electric power supplied from the winding 21B. The rectifying circuit 23B is provided in the rectifying member 23, and is configured to rectify the alternating-current electric power supplied from the winding 22B of the rotor 22. The rectifying circuit 23B includes diodes D1 to D4. The diodes D1 to D4 are rectifiers. The diode D1 has a cathode coupled to a voltage line L21, and an anode coupled to the node N3. The diode D2 has a cathode coupled to the node N3, and an anode coupled to a reference voltage line L22. The diode D3 has a cathode coupled to the voltage line L21, and an anode coupled to the node N4. The diode D4 has a cathode coupled to the node N4, and an anode coupled to the reference voltage line L22. The voltage line L21 and the reference voltage line L22 are coupled to the winding 32B of the rotor 32 of the motor 30. The winding 32B will be described later.

With such a configuration, the inverter 12 converts the direct-current electric power supplied from the direct-current power supply 9 into alternating-current electric power. In addition, the electric power transmission device 20 transmits, from the stator 21 of the electric power transmission device 20 to the rotor 22 of the electric power transmission device 20, the alternating-current electric power supplied from the inverter 12 and rectifies the transmitted alternating-current electric power. In addition, the electric power transmission device 20 supplies the rectified electric power to the winding 32B (described later) of the rotor 32 of the motor 30. Note that although the electric power rectified by the rectifying circuit 23B is directly supplied to the winding 32B in this example, this is non-limiting. Alternatively, for example, the electric power rectified by the rectifying circuit 23B may be supplied to the winding 32B via a stabilizing circuit including a capacitor.

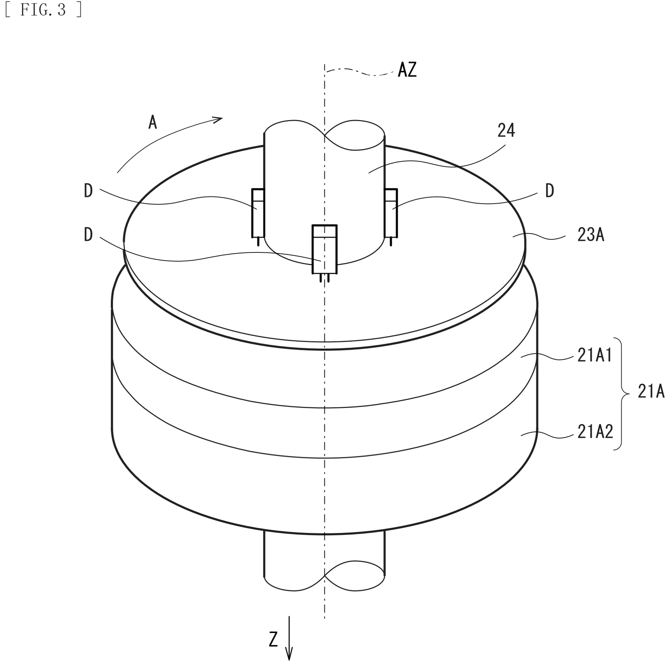

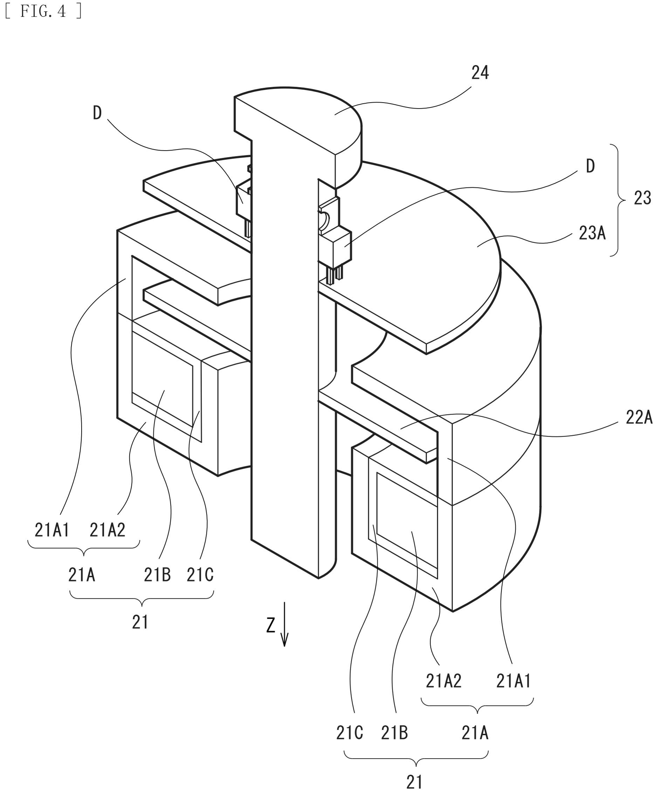

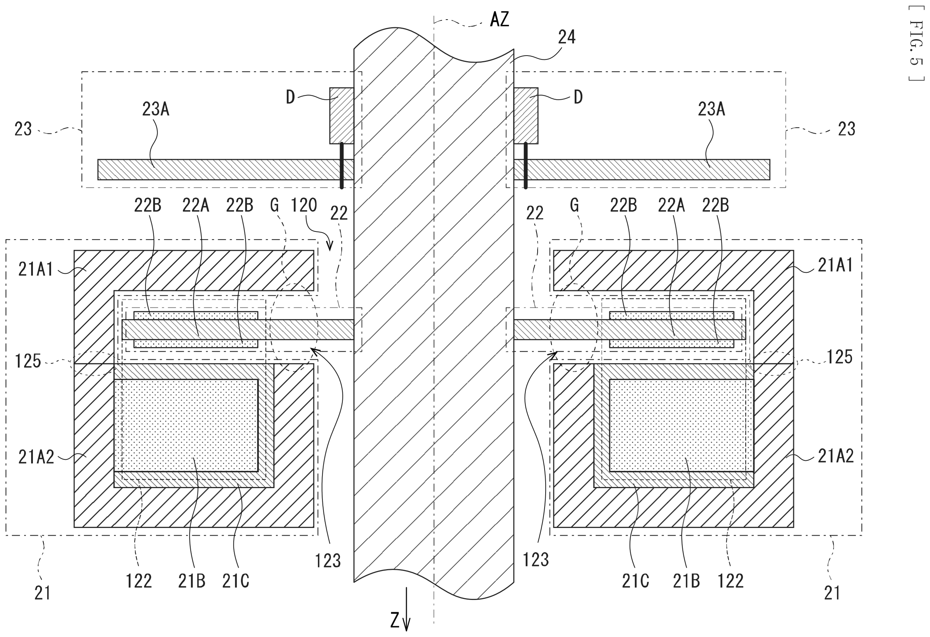

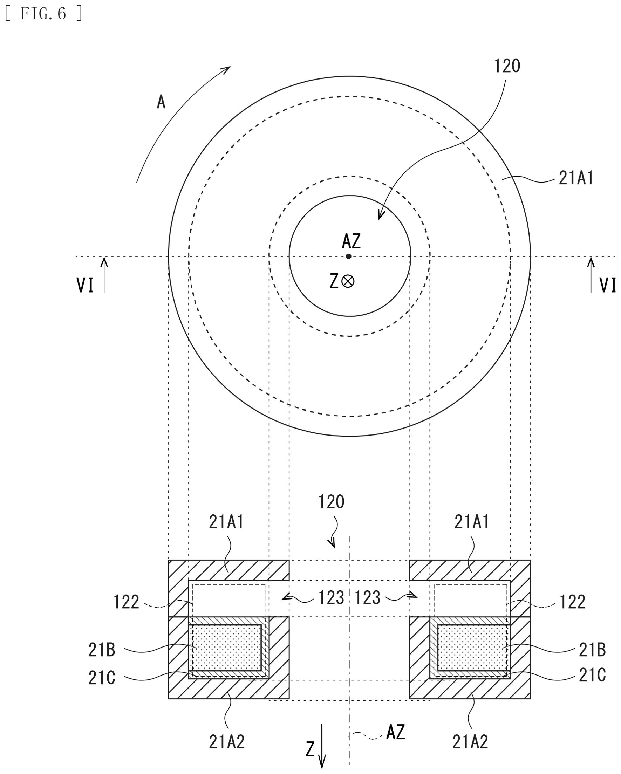

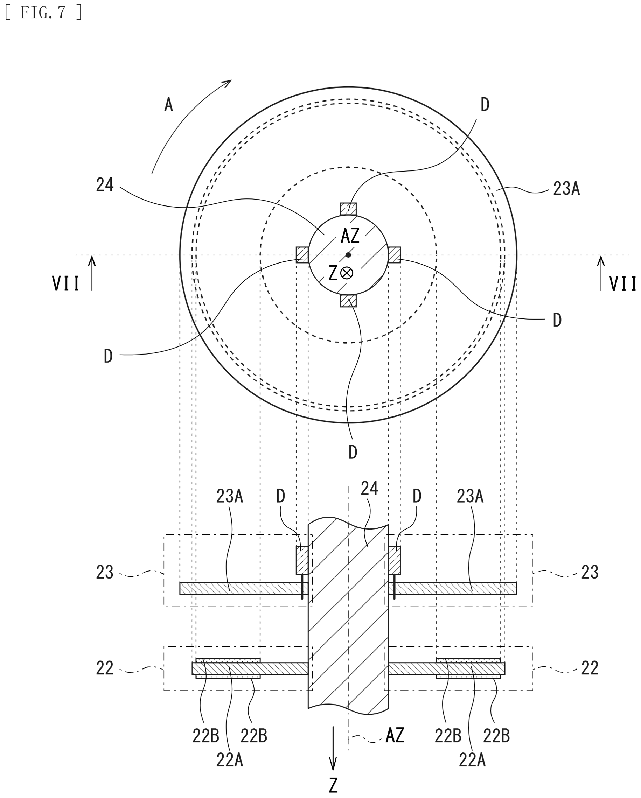

FIGs. 3 and 4 illustrate a configuration example of the electric power transmission device 20. FIG. 5 illustrates an example of a cross-sectional structure of the electric power transmission device 20 in a plane including an axis of rotation AZ. FIG. 6 illustrates a configuration example of the stator 21. FIG. 6 also depicts a cross-sectional structure of the stator 21 in a plane including the axis of rotation AZ as viewed in an arrowed direction VI-VI. FIG. 7 illustrates a configuration example of the rotor 22 and the rectifying member 23. FIG. 7 also depicts a cross-sectional structure of the rotor 22 and the rectifying member 23 in a plane including the axis of rotation AZ as viewed in an arrowed direction VII-VII.

The stator 21 is what is called a stator, and is fixed to an unillustrated housing of the motor apparatus 1. The stator 21 includes a magnetic core 21A and the winding 21B, as illustrated in FIGs. 3 to 6.

The magnetic core 21A includes a magnetic material, such as ferrite. The magnetic core 21A includes magnetic cores 21A1 and 21A2. The magnetic cores 21A1 and 21A2 are provided to allow the rotor 22 to be interposed therebetween in a Z direction. Here, the Z direction is a direction in which the axis of rotation AZ extends, and is from the motor 30 toward the electric power transmission device 20, as illustrated in FIG. 1. The magnetic cores 21A1 and 21A2 are each a ring-shaped magnetic member having a through hole 120 (FIGs. 5 and 6) through which the shaft 24 extends. A part of the magnetic core 21A1 on an outer side in a radial direction (a horizontal direction in FIG. 5) bends in the Z direction and is coupled to the magnetic core 21A2 at a coupling part 125. A part of the magnetic core 21A2 on the outer side in the radial direction (the horizontal direction in FIG. 5) bends in a direction opposite to the Z direction and is coupled to the magnetic core 21A1 at the coupling part 125. Further, a part of the magnetic core 21A2 on an inner side in the radial direction (the horizontal direction in FIG. 5) bends in the direction opposite to the Z direction. This provides, as illustrated in FIG. 5, the magnetic core 21A2 with a groove-shaped recess along a circumferential direction A (FIG. 6) about the axis of rotation AZ in a surface facing toward the rotor 22. The winding 21B is provided in the recess. With such a configuration, the magnetic core 21A including the magnetic cores 21A1 and 21A2 is provided with a cavity 122 along the circumferential direction A, and also provided with an opening 123 (FIGs. 5 and 6) coupling the through hole 120 through which the shaft 24 extends and the cavity 122 to each other. In the opening 123, the magnetic core 21A1 and the magnetic core 21A2 have a gap G (FIG. 5) therebetween.

The winding 21B is wound multiple times along the recess of the magnetic core 21A2. In this example, the winding 21B is wound on a bobbin 21C, and the bobbin 21C on which the winding 21B is wound is fitted in the recess of the magnetic core 21A2. The winding 21B is coupled to the inverter 12 through a hole (not illustrated) bored in the magnetic core 21A2, for example.

The rotor 22 is configured to rotationally move about the axis of rotation AZ. The rotor 22 is so disposed as to be interposed between the magnetic core 21A1 and the magnetic core 21A2 of the stator 21 in the Z direction, and is fixed to the shaft 24. As illustrated in FIGs. 5 and 7, the rotor 22 includes a substrate 22A and the winding 22B.

The substrate 22A includes a printed circuit board (PCB), for example. The substrate 22A is coupled to the shaft 24 and rotationally moves in the circumferential direction A about the axis of rotation AZ with a rotation of the shaft 24.

The winding 22B is configured using a patterned wiring provided on the substrate 22A, and is wound multiple times along the circumferential direction A (FIG. 7) about the axis of rotation AZ. The winding 22B includes a metal material, such as copper. In this example, the winding 22B is provided on both surfaces of the substrate 22A. Note that this is non-limiting, and the winding 22B may be provided on one of both surfaces of the substrate 22A. Further, when the substrate 22A is a multilayer substrate, the winding 22B may be configured using a patterned wiring within the substrate 22A. The one end and the other end of the winding 22B are coupled to the rectifying circuit 23B (FIG. 2) of the rectifying member 23 via an unillustrated wiring provided on the shaft 24.

The rectifying member 23 is configured to rotationally move about the axis of rotation AZ, as with the rotor 22. The rectifying member 23 is disposed in the direction opposite to the Z direction with respect to the rotor 22, and is fixed to the shaft 24. The rectifying member 23 includes a substrate 23A and four diodes D (the diodes D1 to D4).

The substrate 23A includes a printed circuit board, for example. The substrate 23A is coupled to the shaft 24 and rotationally moves in the circumferential direction A about the axis of rotation AZ with the rotation of the shaft 24. The four diodes D (the diodes D1 to D4 illustrated in FIG. 2) are mounted on the substrate 23A. Thus, a patterned wiring of the rectifying circuit 23B (FIG. 2) including the four diodes D is provided on the substrate 23A.

As illustrated in FIG. 7, the four diodes D are mounted in contact with the shaft 24 at four locations around the shaft 24. The four diodes D are mounted on a surface, of the substrate 23A, that is in the direction opposite to the Z direction. In this example, the four diodes D are each mounted on the substrate 23A by what is called through-hole mounting. Note that this is non-limiting, and the four diodes D may be mounted on the substrate surface of the substrate 23A by what is called surface mounting.

In the electric power transmission device 20, as illustrated in FIG. 5, the magnetic core 21A1 and the magnetic core 21A2 are magnetically coupled to each other in the vicinity of the opening 123, with the gap G interposed between the magnetic core 21A1 and the magnetic core 21A2. With such a configuration, the electric power transmission device 20 converts the alternating-current electric power supplied from the inverter 12 in accordance with a ratio between the number of turns of the winding 21B and the number of turns of the winding 22B, and supplies the converted alternating-current electric power to the rectifying circuit 23B including the four diodes D. In addition, the rectifying circuit 23B rectifies the alternating-current electric power supplied from the winding 22B of the rotor 22, and supplies the rectified electric power to the winding 32B (described later) of the rotor 32 of the motor 30.

The shaft 24 (FIG. 1) is coupled to the rotor 32 of the motor 30, and is configured to rotate about the axis of rotation AZ, based on a driving force generated by the motor 30.

The control circuit 19 is configured to control an operation of each of the inverters 11 and 12, based on the instruction from the external control apparatus 8 and a control signal, supplied from the motor 30, that indicates a rotation speed. Specifically, based on the instruction from the external control apparatus 8 and the control signal indicating the rotation speed of the motor 30, the control circuit 19 controls the operation of the inverter 11 to thereby control the rotation speed of the motor 30. Further, based on the control signal from the motor 30 indicating the rotation speed, the control circuit 19 controls the operation of the invertor 12 to thereby control the intensity of a magnetic field to be generated by the rotor 32 of the motor 30. Specifically, for example, when the rotation speed of the motor 30 is low, the control circuit 19 intensifies the magnetic field to be generated by the rotor 32 of the motor 30, and when the rotation speed of the motor 30 is high, the control circuit 19 weakens the magnetic field to be generated by the rotor 32 of the motor 30.

The motor 30 is an electrically excited synchronous motor. The motor 30 includes the stator 31, the rotor 32, and a sensor 33.

The stator 31 is what is called a stator, and is fixed to an unillustrated housing of the motor 30. The stator 31 includes a magnetic core 31A and the winding 31B. The winding 31B is to be supplied with the three-phase (U-phase, V-phase, and W-phase) alternating-current electric power generated by the inverter 11.

The rotor 32 is what is called a rotor, and is configured to rotate about the axis of rotation AZ. The rotor 32 includes a magnetic core 32A and the winding 32B. The winding 32B is to be supplied with a signal rectified by the rectifying circuit 23B.

The sensor 33 is configured to detect a rotation speed of the rotor 32. In addition, the sensor 33 supplies a control signal indicating the rotation speed of the rotor 32 to the control circuit 19.

With such a configuration, in the motor apparatus 1, the rotation speed of the motor 30 is controlled based on the three-phase (U-phase, V-phase, and W-phase) alternating-current electric power generated by the inverter 11, and the magnetic field to be generated by the rotor 32 of the motor 30 is controlled based on the single-phase alternating-current electric power generated by the inverter 12. In the motor apparatus 1, for example, when the rotation speed of the motor 30 is low, the magnetic field to be generated by the rotor 32 of the motor 30 is intensified, and when the rotation speed of the motor 30 is high, the magnetic field to be generated by the rotor 32 of the motor 30 is weakened. This makes it possible for the motor apparatus 1 to increase efficiency of the motor 30 over a wide rotation speed range.

Here, the shaft 24 corresponds to a specific example of a "shaft" in one embodiment of the disclosure. The axis of rotation AZ corresponds to a specific example of an "axis of rotation" in one embodiment of the disclosure. The magnetic core 21A corresponds to a specific example of a "magnetic core" in one embodiment of the disclosure. The cavity 122 corresponds to a specific example of a "cavity" in one embodiment of the disclosure. The opening 123 corresponds to a specific example of an "opening" in one embodiment of the disclosure. The winding 21B corresponds to a specific example of a "first winding" in one embodiment of the disclosure. The substrate 22A corresponds to a specific example of a "first rotary member" in one embodiment of the disclosure. The winding 22B corresponds to a specific example of a "second winding" in one embodiment of the disclosure. The substrate 23A corresponds to a specific example of a "second rotary member" in one embodiment of the disclosure. The diodes D1 to D4 correspond to a specific example of "one or more rectifiers" in one embodiment of the disclosure.

The stator 31 corresponds to a specific example of a "motor stator" in one embodiment of the disclosure. The magnetic core 31A corresponds to a specific example of a "first motor magnetic core" in one embodiment of the disclosure. The winding 31B corresponds to a specific example of a "first motor winding" in one embodiment of the disclosure. The rotor 32 corresponds to a specific example of a "motor rotor" in one embodiment of the disclosure. The magnetic core 32A corresponds to a specific example of a "second motor magnetic core" in one embodiment of the disclosure. The winding 32B corresponds to a specific example of a "second motor winding" in one embodiment of the disclosure. The inverter 12 corresponds to a specific example of an "inverter" in one embodiment of the disclosure. The rectifying circuit 23B corresponds to a specific example of a "rectifying circuit" in one embodiment of the disclosure.

### <Operation and Workings>

Next, a description will be given of operation and workings of the motor apparatus 1 of the present embodiment.

### <Outline of Overall Operation>

The control circuit 19 controls the operation of each of the inverters 11 and 12, based on the instruction from the external control apparatus 8 and the control signal from the motor 30 indicating the rotation speed. Based on the instruction from the control circuit 19, the inverter 11 converts the direct-current electric power supplied from the direct-current power supply 9 into three-phase (U-phase, V-phase, and W-phase) alternating-current electric power, and supplies the three-phase alternating-current electric power to the winding 31B of the stator 31 of the motor 30. Based on the instruction from the control circuit 19, the inverter 12 converts the direct-current electric power supplied from the direct-current power supply 9 into single-phase alternating-current electric power, and supplies the alternating-current electric power to the winding 21B of the stator 21 of the electric power transmission device 20. The electric power transmission device 20 supplies the alternating-current electric power supplied from the inverter 12, from the stator 21 to the rotor 22 by contactless transmission, and rectifies the transmitted alternating-current electric power. In addition, the electric power transmission device 20 supplies the rectified electric power to the winding 32B of the rotor 32 of the motor 30. The motor 30 generates the driving force, which is mechanical energy, based on the three-phase (U-phase, V-phase, and W-phase) alternating-current electric power supplied from the inverter 11. This causes the shaft 24 to rotate about the axis of rotation AZ. The sensor 33 of the motor 30 supplies the control signal indicating the rotation speed of the motor 30 to the control circuit 19.

### <Operation and Workings>

Next, a description will be given of operation and workings of the electric power transmission device 20 of the present embodiment.

The winding 21B of the stator 21 of the electric power transmission device 20 is supplied with the alternating-current electric power from the inverter 12. The rotor 22 rotationally moves in the circumferential direction A illustrated in FIG. 3, for example, about the axis of rotation AZ.

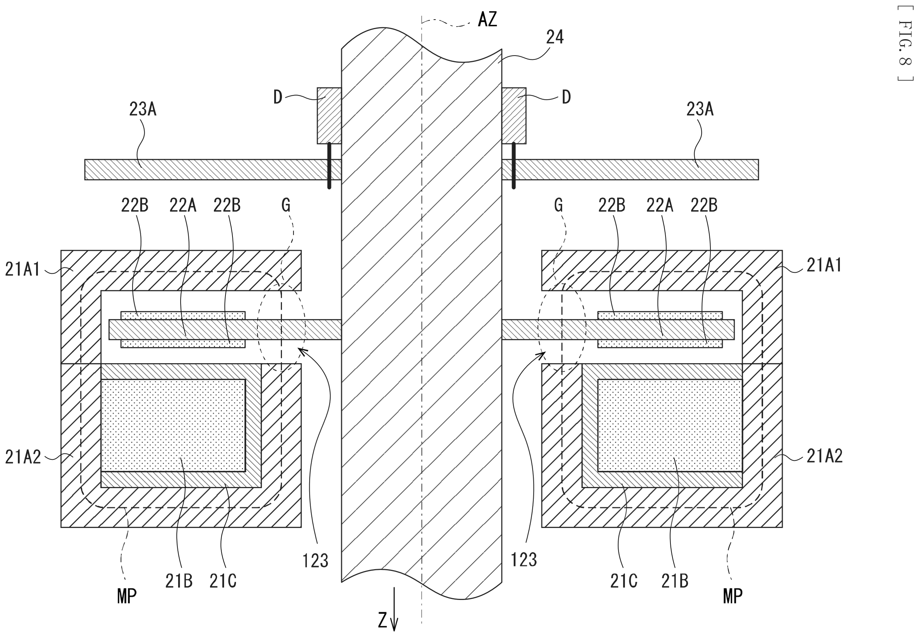

FIG. 8 illustrates a cross-sectional view of the electric power transmission device 20. The winding 21B of the stator 21 generates a magnetic field, based on the alternating-current electric power supplied from the inverter 12. In the vicinity of the opening 123, the magnetic core 21A1 and the magnetic core 21A2 are magnetically coupled to each other with the gap G in the opening 123 therebetween. In this way, in the electric power transmission device 20, a magnetic path MP is generated within the magnetic core 21A1 and the magnetic core 21A2. Based on the magnetic field in the magnetic path MP, the winding 22B of the rotor 22 generates alternating-current electric power, and supplies the generated alternating-current electric power to the rectifying circuit 23B of the rectifying member 23. The electric power transmission device 20 thus transmits electric power by contactless transmission. This makes it possible to increase reliability as compared with a case of transmitting electric power by contact transmission through the use of, for example, a slip ring and a brush.

The rectifying circuit 23B rectifies the alternating-current voltage supplied from the winding 22B of the rotor 22. The four diodes D of the rectifying circuit 23B are mounted in contact with the shaft 24. This allows heat generated in the four diodes D to be transferred over a wide range via the shaft 24 and dissipated. The electric power transmission device 20 thus allows for effective dissipation of heat from the four diodes D, which makes it possible to reduce a possibility of an erroneous operation of the electric power transmission device 20 and a possibility of malfunction of the electric power transmission device 20, thereby making it possible to increase reliability. Further, owing to the four diodes D being disposed at locations close to the shaft 24 in the radial direction (the horizontal direction in FIG. 5) as described above, it is possible to reduce centrifugal force to be exerted on the four diodes D when the shaft 24 rotates about the axis of rotation AZ. This makes it possible for the electric power transmission device 20 to reduce stress on the four diodes D and on a solder part between the four diodes D and the substrate 23A, which in turn makes it possible to increase reliability.

In addition, the rectifying circuit 23B supplies the rectified electric power to the winding 32B of the rotor 32 of the motor 30. This allows the rotor 32 of the motor 30 to generate a magnetic field. For example, when the rotation speed of the motor 30 is low, the control circuit 19 intensifies the magnetic field to be generated by the rotor 32 of the motor 30, and when the rotation speed of the motor 30 is high, the control circuit 19 weakens the magnetic field to be generated by the rotor 32 of the motor 30. This makes it possible for the motor apparatus 1 to increase efficiency of the motor 30 over a wide rotation speed range.

As described above, the electric power transmission device 20 includes the magnetic core 21A, the first winding (the winging 21B), the first rotary member (the substrate 22A), the second winding (the winding 22B), and the four diodes D. The magnetic core 21A has a ring shape including the through hole 120 through which the shaft 24 extends. The magnetic core 21A includes therein the cavity 122 along the circumferential direction A about the axis of rotation AZ of the shaft 24, and has the opening 123 provided along the circumferential direction A in the surface, of the magnetic core 21A, that is in contact with the through hole 120. The opening 123 couples the through hole 120 and the cavity 122 to each other. The first winding (the winding 21B) is provided in the cavity 122 and wound along the circumferential direction A. The first rotary member (the substrate 22A) is provided at a location corresponding to the opening 123 in the axial direction of the axis of rotation AZ, and is rotationally movable in the circumferential direction A, inside the cavity 122, with the rotation of the shaft 24. The second winding (the winding 22B) is provided on the first rotary member (the substrate 22A) and wound along the circumferential direction A. The four diodes D are provided in contact with the shaft 24 and are coupled to the second winding (the winding 22B). This allows heat generated in the four diodes D to be transferred over a wide range via the shaft 24 and dissipated, thus allowing for effective dissipation of the heat from the four diodes D. Further, owing to the four diodes D being disposed at locations close to the shaft 24 in the radial direction (the horizontal direction in FIG. 5), it is possible to reduce stress to be exerted on the four diodes D when the shaft 24 rotates about the axis of rotation AZ. As a result, it is possible for the electric power transmission device 20 to increase reliability.

### [Effects]

As described above, a magnetic core, a first winding, a first rotary member, a second winding, and four diodes are provided in the present embodiment. The magnetic core has a ring shape including a through hole through which a shaft extends. The magnetic core includes therein a cavity along a circumferential direction about an axis of rotation of the shaft, and has an opening provided along the circumferential direction in a surface, of the magnetic core, that is in contact with the through hole. The opening couples the through hole and the cavity to each other. The first winding is provided in the cavity and wound along the circumferential direction. The first rotary member is provided at a location corresponding to the opening in an axial direction of the axis of rotation, and is rotationally movable in the circumferential direction, inside the cavity, with a rotation of the shaft. The second winding is provided on the first rotary member and wound along the circumferential direction. The four diodes are provided in contact with the shaft and are coupled to the second winding. This makes it possible to increase reliability.

### [Modification Example 1-1]

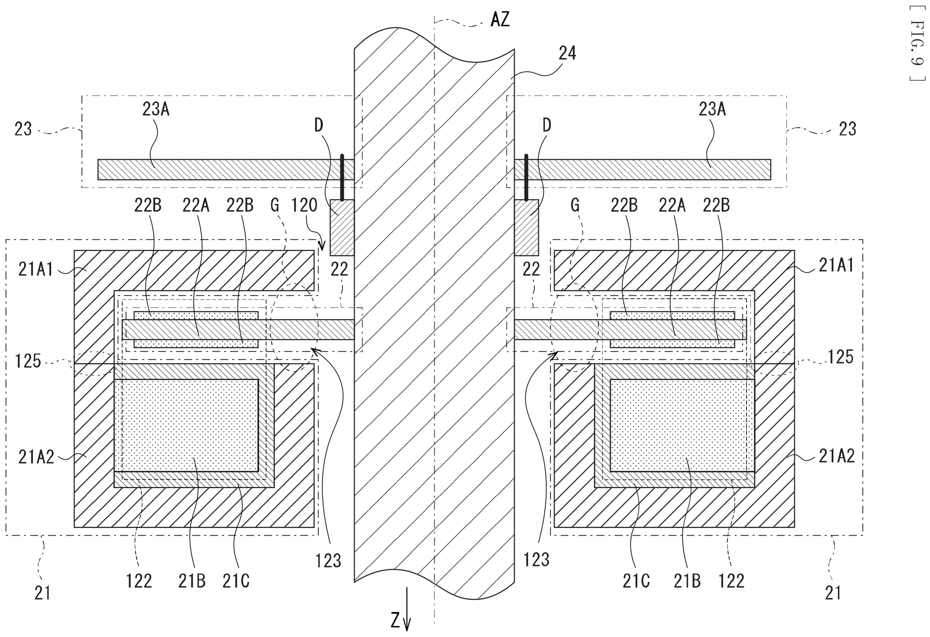

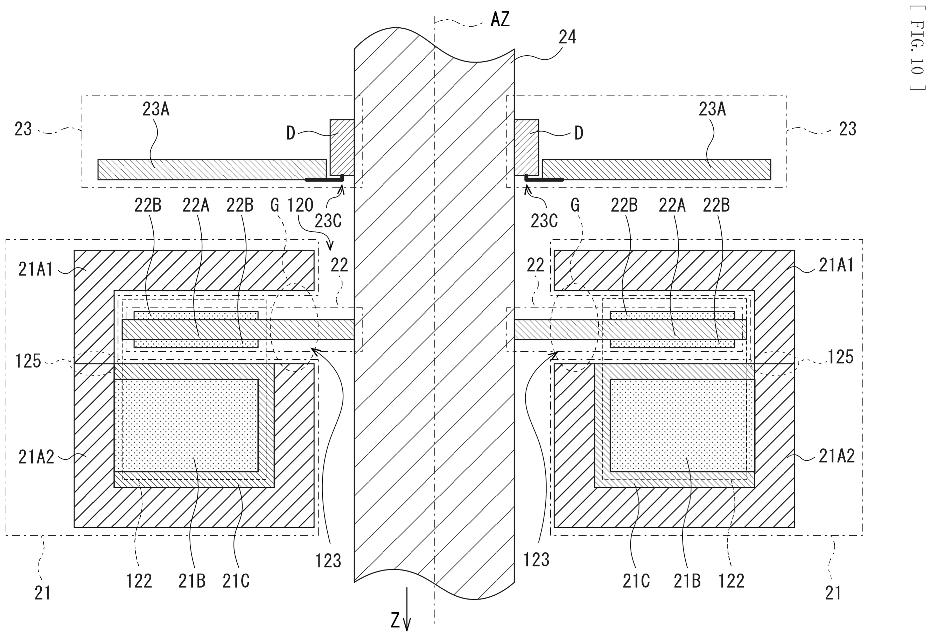

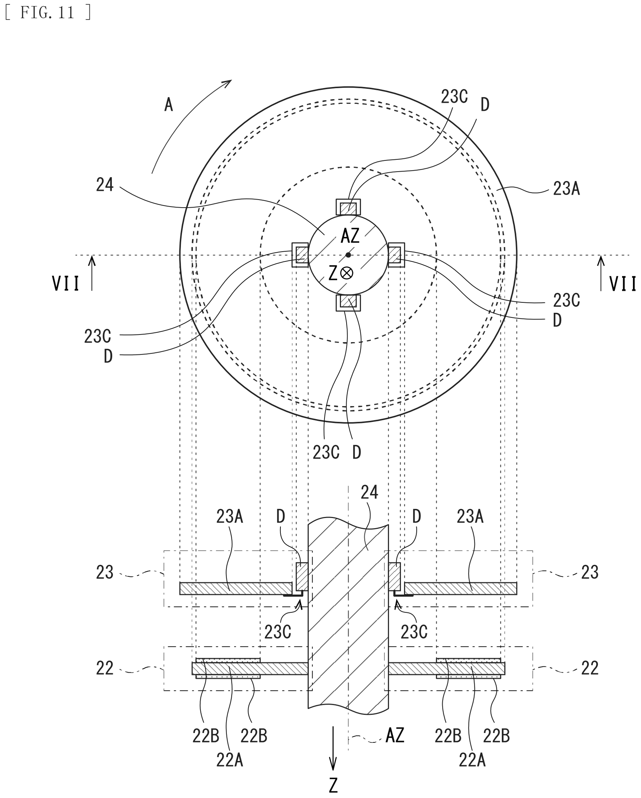

In the foregoing embodiment, as illustrated in FIGs. 4 and 5, for example, the four diodes D are provided on the surface, of the substrate 23A, that is in the direction opposite to the Z direction; however, this is non-limiting. Alternatively, as illustrated in FIG. 9, for example, the four diodes D may be provided on a surface, of the substrate 23A, that is in the Z direction. Alternatively, as illustrated in FIGs. 10 and 11, cutouts may be provided in a part of the substrate 23A, and the four diodes D may be provided in the cutouts. The substrate 23A has four cutouts 23C at four locations around the shaft 24. The four diodes D are provided in the four respective cutouts 23C and are mounted in contact with the shaft 24.

### [Modification Example 1-2]

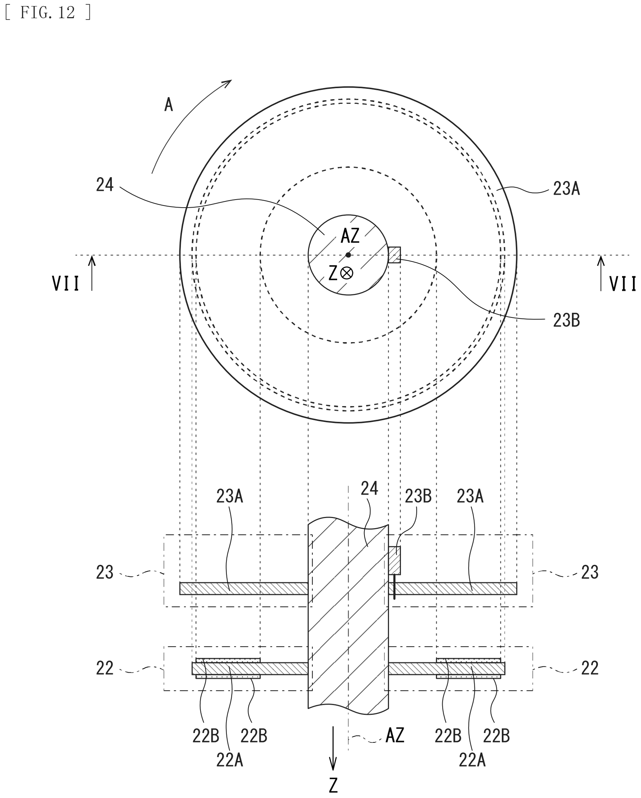

In the foregoing embodiment, as illustrated in FIG. 7, for example, the four diodes D are individually mounted; however, this is non-limiting. Alternatively, for example, when the rectifying circuit 23B including the four diodes D is contained in a single package, the rectifying circuit 23B may be mounted in contact with the shaft 24, as illustrated in FIG. 12.

### [Modification Example 1-3]

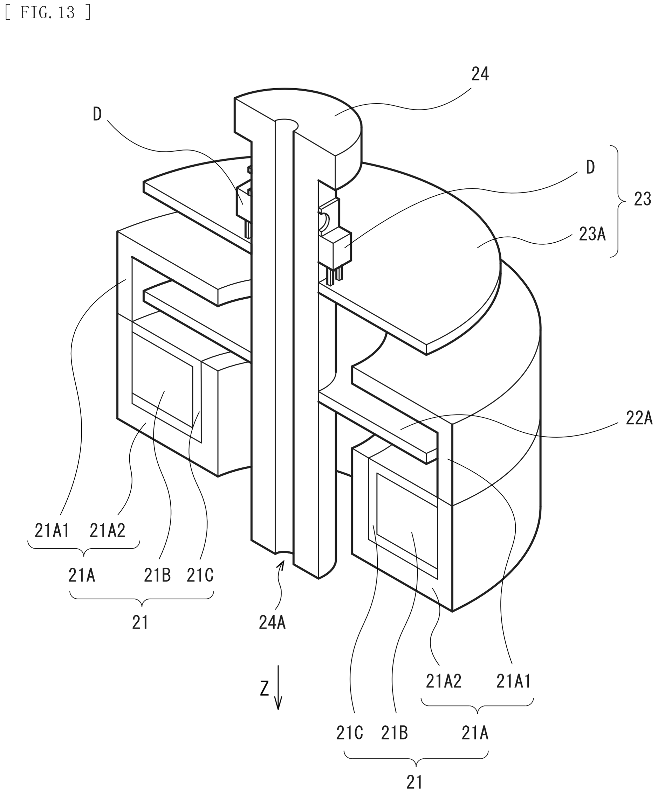

In the foregoing embodiment, the four diodes D are mounted in contact with the shaft 24 to thereby allow for effective dissipation of heat from the four diodes D. For example, as illustrated in FIG. 13, a cooling medium such as oil may be allowed to flow within the shaft 24. In this example, a flow path 24A for a cooling medium such as oil to flow through is provided within the shaft 24. By allowing the cooling medium to flow through such a flow path 24A, it is possible to achieve further effective dissipation of heat from the four diodes D.

### [Modification Example 1-4]

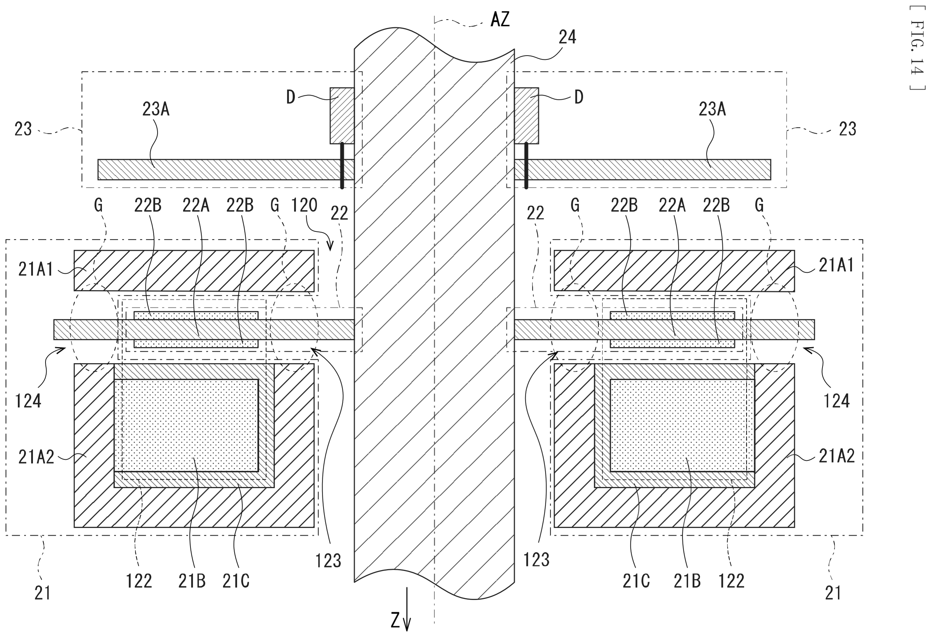

In the foregoing embodiment, as illustrated in FIG. 5, the magnetic core 21A has the opening 123; however, this is non-limiting. Alternatively, for example, as illustrated in FIG. 14, the magnetic core 21A may further have another opening. In this example, the magnetic core 21A1 has a plate shape. This configuration allows the magnetic core 21A including the magnetic core 21A1 and the magnetic core 21A2 to have an opening 124 that couples a space on the outer side of the magnetic core 21A in the radial direction (the horizontal direction in FIG. 14) of the axis of rotation AZ and the cavity 122 to each other. In the opening 124, the magnetic core 21A1 and the magnetic core 21A2 have a gap G therebetween. The magnetic core 21A1 and the magnetic core 21A2 are magnetically coupled to each other with the gap G therebetween in the opening 123, and are magnetically coupled to each other with the gap G therebetween in the opening 124.

### [Other Modification Examples]

Further, two or more of these modification examples may be combined.

### <2. Second Embodiment>

Next, a description will be given of a motor apparatus 2 according to a second embodiment. In the present embodiment, the electric power transmission device 20 of the foregoing first embodiment is so configured that the rotor 22 and the rectifying member 23 are integrated with each other. Note that components substantially the same as those in the motor apparatus 1 according to the foregoing first embodiment are denoted with the same reference signs and descriptions thereof are omitted where appropriate.

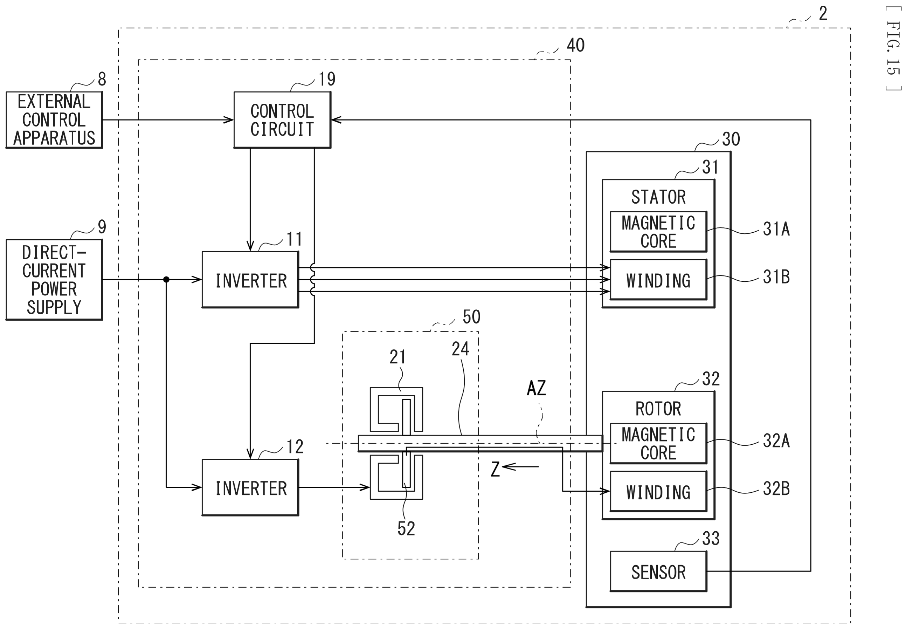

FIG. 15 illustrates a configuration example of the motor apparatus 2. The motor apparatus 2 includes a driver 40 and the motor 30. The driver 40 includes an electric power transmission device 50. The electric power transmission device 50 includes the stator 21, a rotor 52, and the shaft 24.

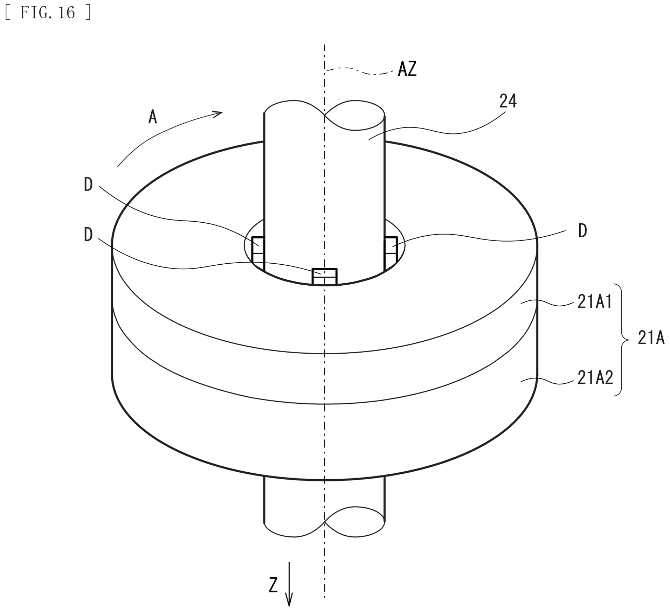

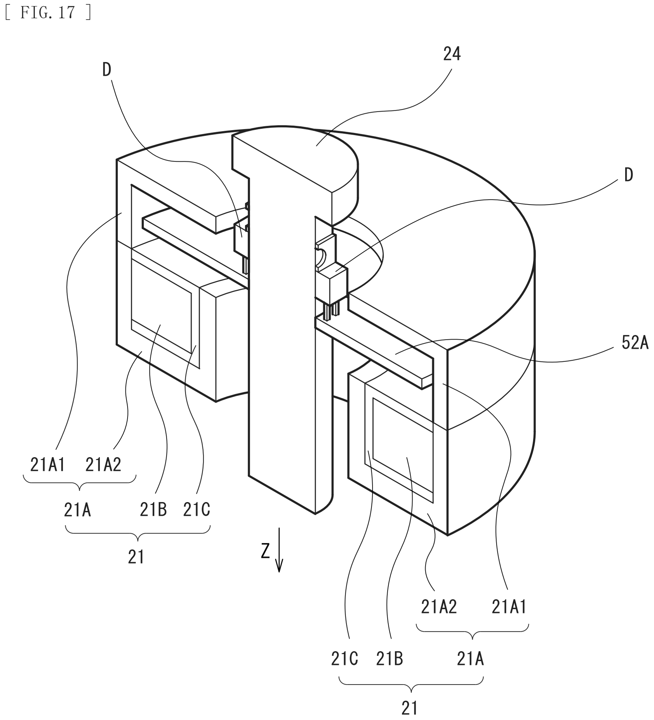

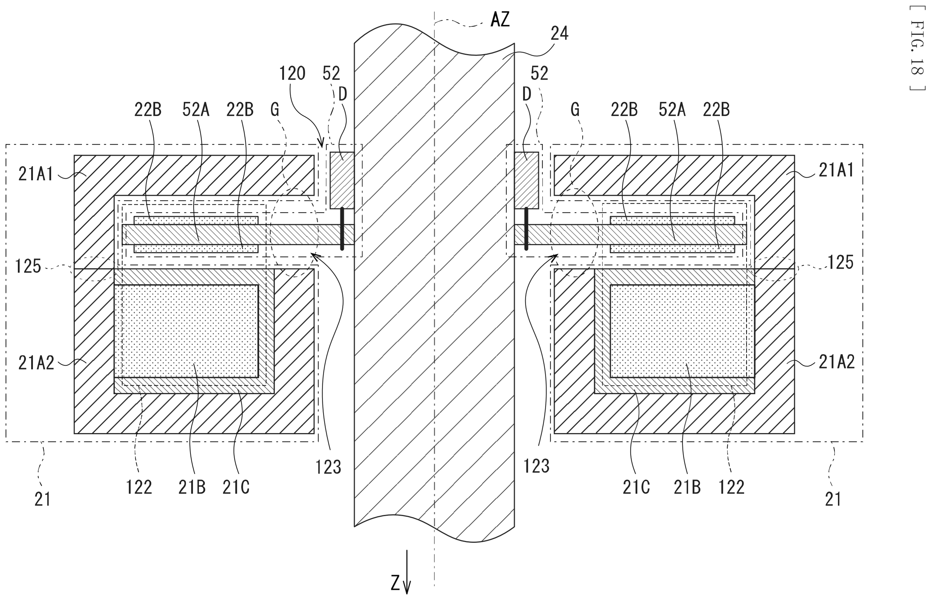

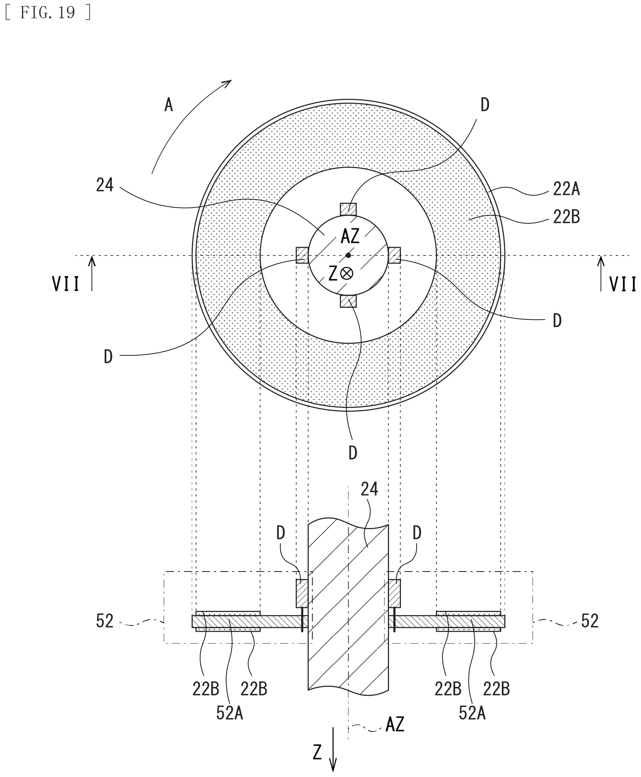

FIGs. 16 and 17 illustrate a configuration example of the electric power transmission device 50. FIG. 18 illustrates an example of a cross-sectional structure of the electric power transmission device 50 in a plane including the axis of rotation AZ. FIG. 19 illustrates a configuration example of the rotor 52.

As illustrated in FIGs. 18 and 19, the rotor 52 includes a substrate 52A, the winding 22B, and the four diodes D (the diodes D1 to D4).

The substrate 52A includes a printed circuit board, for example. The substrate 52A is coupled to the shaft 24 and rotationally moves in the circumferential direction A about the axis of rotation AZ with the rotation of the shaft 24. The winding 22B is provided on the substrate 52A, similarly to the foregoing first embodiment. Further, the four diodes D (the diodes D1 to D4 illustrated in FIG. 2) are mounted on the substrate 52A, and the patterned wiring of the rectifying circuit 23B (FIG. 2) including the four diodes D is provided on the substrate 52A.

As illustrated in FIG. 19, the four diodes D are mounted in contact with the shaft 24 at four locations around the shaft 24. In this example, the four diodes D are each mounted on the substrate 52A by what is called through-hole mounting. Note that this is non-limiting, and the four diodes D may be mounted on a substrate surface of the substrate 52A by what is called surface mounting.

The rectifying circuit 23B including the four diodes D rectifies the alternating-current voltage supplied from the winding 22B of the rotor 52. The four diodes D are mounted in contact with the shaft 24. This allows heat generated in the four diodes D to be transferred over a wide range via the shaft 24 and dissipated. The electric power transmission device 50 thus allows for effective dissipation of heat from the four diodes D, which makes it possible to reduce a possibility of an erroneous operation of the electric power transmission device 50 and a possibility of malfunction of the electric power transmission device 50, thereby making it possible to increase reliability. Further, owing to the four diodes D being disposed at locations close to the shaft 24 in the radial direction (the horizontal direction in FIG. 5) as described above, it is possible to reduce centrifugal force to be exerted on the four diodes D when the shaft 24 rotates about the axis of rotation AZ. This makes it possible for the electric power transmission device 50 to reduce stress on the four diodes D and on the solder part between the four diodes D and the substrate 52A, which in turn makes it possible to increase reliability.

In the electric power transmission device 50, as illustrated in FIGs. 17 and 18, the four diodes D are provided on the first rotary member (the substrate 52A). Accordingly, as compared with a case of the foregoing first embodiment (FIGs. 4 and 5), it is unnecessary to provide the substrate 23A and it is possible for the four diodes D to be placed within a space between the magnetic core 21A1 and the shaft 24, which allows for size reduction of the electric power transmission device 50. Further, as illustrated in FIGs. 17 and 18, the four diodes D are surrounded by the magnetic core 21A. Accordingly, radiated noise from the vicinity of the four diodes D caused by switching operations is shielded by the magnetic core 21A to some extent. As a result, it is possible for the electric power transmission device 50 to reduce radiated noise.

As has been described, in the present embodiment, the four diodes are provided on the first rotary member. This makes it possible to reduce the size of the electric power transmission device and to reduce radiated noise. Other effects are similar to those in the case of the foregoing first embodiment.

### [Modification Example 2-1]

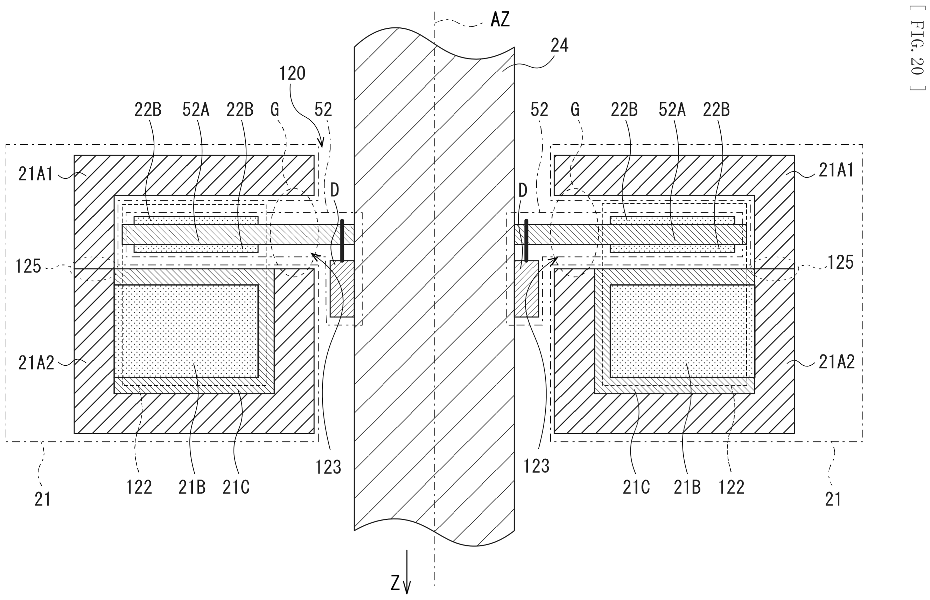

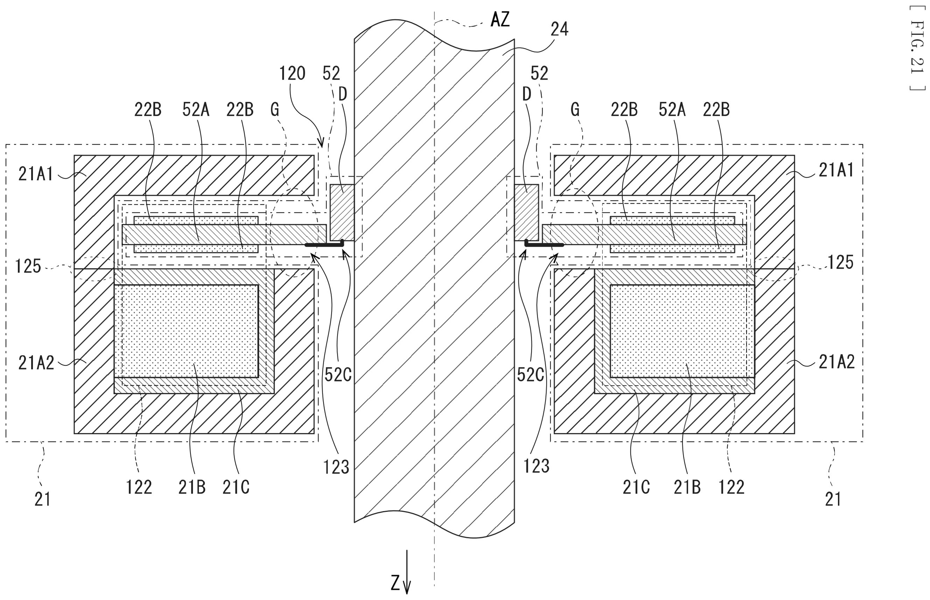

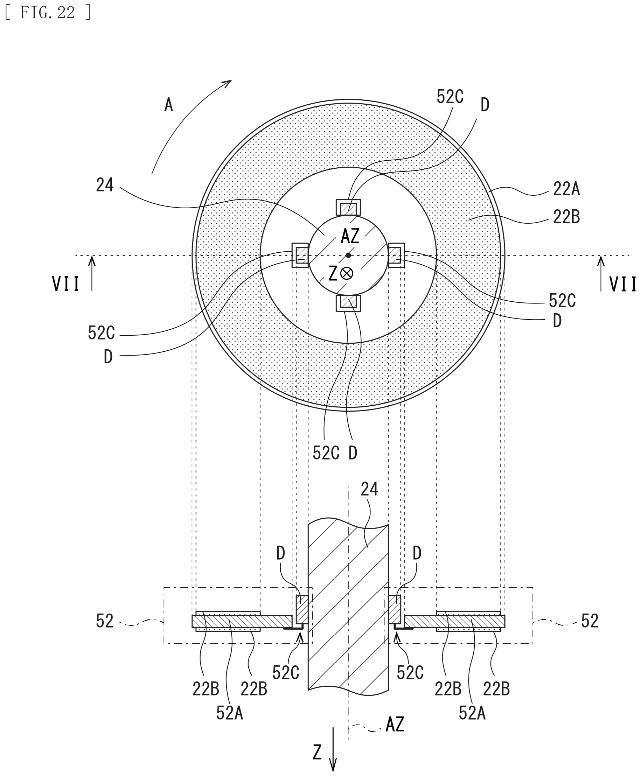

In the foregoing embodiment, as illustrated in FIGs. 17 and 18, for example, the four diodes D are provided on a surface, of the substrate 52A, that is in the direction opposite to the Z direction; however, this is non-limiting. Alternatively, as illustrated in FIG. 20, for example, the four diodes D may be provided on a surface, of the substrate 52A, that is in the Z direction. Alternatively, as illustrated in FIGs. 21 and 22, cutouts may be provided in a part of the substrate 52A, and the four diodes D may be provided in the cutouts. The substrate 52A has four cutouts 52C at four locations around the shaft 24. The four diodes D are provided in the four respective cutouts 52C and are mounted in contact with the shaft 24.

### [Modification Example 2-2]

In the foregoing embodiment, as illustrated in FIG. 19, for example, the four diodes D are individually mounted; however, this is non-limiting. Alternatively, for example, when the rectifying circuit 23B including the four diodes D is contained in a single package, the rectifying circuit 23B may be mounted in contact with the shaft 24, as in Modification Example 1-2 (FIG. 12) of the foregoing first embodiment.

### [Modification Example 2-3]

In the foregoing embodiment, the four diodes D are mounted in contact with the shaft 24 to thereby allow for effective dissipation of heat from the four diodes D. For example, as in Modification Example 1-3 (FIG. 13) of the foregoing first embodiment, a cooling medium such as oil may be allowed to flow within the shaft 24.

### [Modification Example 2-4]

In the foregoing embodiment, as illustrated in FIG. 18, the magnetic core 21A has the opening 123; however, this is non-limiting. Alternatively, for example, as in Modification Example 1-4 (FIG. 14) of the foregoing first embodiment, the magnetic core 21A may further have another opening.

### [Other Modification Examples]

Further, two or more of these modification examples may be combined.

The invention has been described hereinabove with reference to the embodiments and the modification examples. However, the invention is not limited to the embodiments, etc., and may be modified in a variety of ways.

For example, in the foregoing embodiments, etc., the rectifying circuit 23B is provided with the four diodes D, as illustrated in FIG. 2; however, this is non-limiting. Alternatively, for example, the rectifying circuit 23B may be provided with four switching elements as rectifiers, and the four switching elements of the rectifying circuit 23B may be caused to operate in synchronization with the switching operations of the four switching elements SW1 to SW4 of the inverter 12. In such a case, the four switching elements of the rectifying circuit 23B are provided in contact with the shaft 24.

For example, the circuit configuration of the rectifying circuit 23B illustrated in each of the foregoing embodiments, etc. is one example, and the disclosed circuit configuration is non-limiting. For example, the rectifying circuit may include a single diode, or may include a plurality of diodes.

For example, the shapes of the stator 21 and the rotors 22 and 52 illustrated in the foregoing embodiments, etc. are each one example, and the disclosed shapes are non-limiting.

For example, the circuit configuration of the inverter 12 and the circuit configuration of the rectifying circuit 23B illustrated in each of the foregoing embodiments, etc. are one example, and the disclosed circuit configurations are non-limiting.

The effects described in the present specification are mere examples, and effects of the disclosure are not limited to those described in the present specification. Accordingly, the disclosure may achieve any other effect.

Further, the disclosure may encompass the following embodiments.

(1) An electric power transmission device including:
   a magnetic core having a ring shape including a through hole through which a shaft extends, the magnetic core including therein a cavity along a circumferential direction about an axis of rotation of the shaft, and having an opening provided along the circumferential direction in a surface, of the magnetic core, that is in contact with the through hole, the opening coupling the through hole and the cavity to each other;
   a first winding provided in the cavity and wound along the circumferential direction;
   a first rotary member provided at a location corresponding to the opening in an axial direction of the axis of rotation, the first rotary member being rotationally movable in the circumferential direction, inside the cavity, with a rotation of the shaft;
   a second winding provided on the first rotary member and wound along the circumferential direction; and
   one or more rectifiers provided in contact with the shaft and coupled to the second winding.
(2) The electric power transmission device according to (1), further including
   a second rotary member provided at a different location, in the axial direction of the axis of rotation, from a location where the magnetic core is provided, the second rotary member being rotationally movable in the circumferential direction with the rotation of the shaft, in which
   the one or more rectifiers are provided on the second rotary member.
(3) The electric power transmission device according to (2), in which
   the second rotary member has a first surface facing the magnetic core, and a second surface opposite to the first surface, and
   the one or more rectifiers are provided on the first surface or the second surface.
(4) The electric power transmission device according to (2), in which
   the second rotary member has cutouts provided at locations in contact with the shaft, and
   the one or more rectifiers are each provided in corresponding one of the cutouts.
(5) The electric power transmission device according to any one of (2) to (4), in which the second rotary member includes a printed circuit board.
(6) The electric power transmission device according to (1), in which the one or more rectifiers are provided on the first rotary member.
(7) The electric power transmission device according to (6), in which
   the first rotary member has a first surface, and a second surface opposite to the first surface, and
   the one or more rectifiers are provided on the first surface or the second surface.
(8) The electric power transmission device according to (6), in which
   the first rotary member has cutouts provided at locations in contact with the shaft, and
   the one or more rectifiers are each provided in corresponding one of the cutouts.
(9) The electric power transmission device according to any one of (6) to (8), in which the first rotary member includes a printed circuit board.
(10) A motor apparatus including:
   a motor including a motor stator and a motor rotor, the motor stator including a first motor magnetic core and a first motor winding, the motor rotor including a second motor magnetic core and a second motor winding;
   a shaft coupled to the motor rotor;
   an inverter;
   a magnetic core having a ring shape including a through hole through which the shaft extends, the magnetic core including therein a cavity along a circumferential direction of the shaft, and having an opening provided along the circumferential direction in a surface, of the magnetic core, that is in contact with the through hole, the opening coupling the through hole and the cavity to each other;
   a first winding coupled to the inverter, provided in the cavity, and wound along the circumferential direction;
   a first rotary member provided at a location corresponding to the opening in an axial direction of the shaft, the first rotary member being rotationally movable in the circumferential direction, inside the cavity, with a rotation of the shaft;
   a second winding provided on the first rotary member and wound along the circumferential direction; and
   one or more rectifiers provided in contact with the shaft, coupled to the second winding, and provided in a path coupling the second winding and the second motor winding to each other.

## Claims

1. An electric power transmission device comprising:
a magnetic core having a ring shape including a through hole through which a shaft extends, the magnetic core including therein a cavity along a circumferential direction about an axis of rotation of the shaft, and having an opening provided along the circumferential direction in a surface, of the magnetic core, that is in contact with the through hole, the opening coupling the through hole and the cavity to each other;
a first winding provided in the cavity and wound along the circumferential direction;
a first rotary member provided at a location corresponding to the opening in an axial direction of the axis of rotation, the first rotary member being rotationally movable in the circumferential direction, inside the cavity, with a rotation of the shaft;
a second winding provided on the first rotary member and wound along the circumferential direction; and
one or more rectifiers provided in contact with the shaft and coupled to the second winding.

2. The electric power transmission device according to claim 1, further comprising
a second rotary member provided at a different location, in the axial direction of the axis of rotation, from a location where the magnetic core is provided, the second rotary member being rotationally movable in the circumferential direction with the rotation of the shaft, wherein
the one or more rectifiers are provided on the second rotary member.

3. The electric power transmission device according to claim 2, wherein
the second rotary member has a first surface facing the magnetic core, and a second surface opposite to the first surface, and
the one or more rectifiers are provided on the first surface or the second surface.

4. The electric power transmission device according to claim 2, wherein
the second rotary member has cutouts provided at locations in contact with the shaft, and
the one or more rectifiers are each provided in corresponding one of the cutouts.

5. The electric power transmission device according to claim 2, wherein the second rotary member comprises a printed circuit board.

6. The electric power transmission device according to claim 1, wherein the one or more rectifiers are provided on the first rotary member.

7. The electric power transmission device according to claim 6, wherein
the first rotary member has a first surface, and a second surface opposite to the first surface, and
the one or more rectifiers are provided on the first surface or the second surface.

8. The electric power transmission device according to claim 6, wherein
the first rotary member has cutouts provided at locations in contact with the shaft, and
the one or more rectifiers are each provided in corresponding one of the cutouts.

9. The electric power transmission device according to claim 6, wherein the first rotary member comprises a printed circuit board.

10. A motor apparatus comprising:
a motor including a motor stator and a motor rotor, the motor stator including a first motor magnetic core and a first motor winding, the motor rotor including a second motor magnetic core and a second motor winding;
a shaft coupled to the motor rotor;
an inverter;
a magnetic core having a ring shape including a through hole through which the shaft extends, the magnetic core including therein a cavity along a circumferential direction of the shaft, and having an opening provided along the circumferential direction in a surface, of the magnetic core, that is in contact with the through hole, the opening coupling the through hole and the cavity to each other;
a first winding coupled to the inverter, provided in the cavity, and wound along the circumferential direction;
a first rotary member provided at a location corresponding to the opening in an axial direction of the shaft, the first rotary member being rotationally movable in the circumferential direction, inside the cavity, with a rotation of the shaft;
a second winding provided on the first rotary member and wound along the circumferential direction; and
one or more rectifiers provided in contact with the shaft, coupled to the second winding, and provided in a path coupling the second winding and the second motor winding to each other.
